# FASCICULE DE BREVET EUROPEEN

(11) **EP 3 925 890 B1**
(45) Date de publication et mention de la délivrance du brevet: **08.11.2023**
(21) Numéro de dépôt: 21178924.3
(22) Date de dépôt: 11.06.2021
(51) Int. Cl.: B64D 45/00, B64D 41/00

(54) **ARCHITECTURE ÉLECTRIQUE D'UN AÉRONEF**
ELEKTRISCHER AUFBAU EINES LUFTFAHRZEUGS
AIRCRAFT ELECTRICAL ARCHITECTURE

(30) Priorité: 16.06.2020 FR 2006263
(43) Date de publication de la demande: 22.12.2021
(73) Titulaire: THALES, 92400 Courbevoie (FR)
(72) Inventeur: DEVAUTOUR, Joël, 78400 CHATOU (FR)
(74) Mandataire: Atout PI Laplace

(56) Documents cités:
- EP-A1- 2 801 719
- WO-A1-2008/049886
- WO-A2-2009/125012
- US-A1- 2016 083 106

## Description

L'invention concerne l'amélioration de l'architecture électrique d'un aéronef. A bord d'un avion de type commercial, l'énergie électrique est couramment générée par des générateurs principaux, couplés mécaniquement aux moteurs de propulsion de l'avion. Chaque générateur fournit une tension alternative alimentant un réseau électrique de l'avion qui distribue l'énergie électrique alternative ou continue nécessaire au fonctionnement de charges électriques situées en zone fuselage ainsi qu'en zone moteur.

De façon conventionnelle, la génération électrique des avions commerciaux peut se faire en courant alternatif à fréquence fixe, classiquement 400 Hz, à partir de turbines à gaz tournant à vitesse variable. La tension nominale des réseaux de bord alternatifs est généralement de 115V. Sur certains avions récents, cette tension a été portée à 230V. Pour ce faire, un système de régulation de vitesse est implanté entre l'arbre de la turbine à gaz et un alternateur pouvant alors tourner à vitesse fixe pour générer la fréquence fixe souhaitée. Un système de régulation de vitesse mettant en oeuvre un convertisseur hydraulique et est connu dans la littérature anglo-saxonne sous le nom de CSD pour : « Constant Speed Drive ». Le générateur et le convertisseur hydraulique peuvent être intégré pour former un équipement connu dans la littérature anglo-saxonne sous le nom d'IDG pour : « Integrated Drive Generator ». Plus récemment, on a tenté de se passer de ces convertisseurs hydrauliques en faisant tourner les alternateurs en vitesse variable et donc de générer des réseaux de bord à fréquence variable, par exemple entre 400 et 800 Hz. Un exemple d'architecture électrique d'avion commercial est donné dans le document US 2019/083106.

A bord des avions gros porteur, d'autres générateurs électriques existent de façon courante, notamment un groupe auxiliaire de puissance et une éolienne de secours.

Le groupe auxiliaire de puissance est connu dans la littérature anglo-saxonne sont le nom de « Auxiliary Power Unit » et appelé par la suite APU par son acronyme anglais. L'APU est un groupe auxiliaire comprenant généralement une turbine à gaz couplée à un générateur électrique. L'APU est généralement situé dans le cône de queue de l'avion et est alimenté par le kérosène des réservoirs de l'avion. L'APU est démarré par une batterie de l'avion. L'APU est destiné à produire de l'air pour le système de conditionnement d'air de l'avion et pour le démarrage des moteurs de propulsion lorsque ceux-ci sont équipés de systèmes de démarrage à air. L'APU peut également produire de l'énergie hydraulique et/ou électrique pour alimenter au sol les différents systèmes de bord lorsque les moteurs de propulsion sont à l'arrêt et pour démarrer ces moteurs lorsque ceux-ci sont équipés de démarreurs électriques. L'APU peut également être utilisé en vol en cas de panne des générateurs principaux.

L'éolienne de secours est connue dans la littérature anglo-saxonne sont le nom de « Ram Air Turbine » et est appelée par la suite RAT par son acronyme anglais. La RAT est formée d'une turbine éolienne disposée dans une soute de l'avion. La RAT est déployée en vol en cas de perte des sources d'énergie électrique principale de l'avion, générateurs principaux couplés aux moteurs de propulsion et APU. La RAT est entraînée par le flux d'air généré par l'avancée de l'avion. La RAT est couplée à une pompe hydraulique ou à un alternateur. La RAT est utilisée comme une source d'énergie de secours sur les avions.

L'APU et la RAT représentent une masse embarquée importante à bord de l'avion. L'APU et la RAT ne sont pas utiles dans les principales phases de vol. De plus, l'APU est de moins en moins utilisé lorsque l'avion est parqué au sol pour éviter les risques de pollution. Certains aéroports imposent même d'utiliser des servitudes en air et en électricité mises à disposition.

Au sol, l'avion peut également être alimenté par un générateur extérieur souvent appelé : groupe de parc, ce qui permet de ne pas utiliser l'APU.

Les différents générateurs électriques sont raccordés à un système de distribution de puissance électrique connu dans la littérature anglo-saxonne sous le nom de « Electrical Power Distribution System » appelé par la suite EPDS pour son acronyme anglais. L'EPDS est lui-même constitué de coeurs électriques primaires et secondaires. Les coeurs électriques primaires comportent des barres de distribution électriques ségréguées entre elles en fonctionnement nominal. L'interconnexion des barres électriques est possible en cas de perte d'un ou de plusieurs générateurs. Les barres électriques ne sont pas toutes à la même tension. Elles sont raccordées entre elles par des convertisseurs de puissance permettant d'élaborer les différents niveaux de tension et de fréquence nécessaire au fonctionnement des différentes charges. Les coeurs électriques secondaires assurent la commande et la protection des charges électriques de l'avion.

L'EPDS permet d'élaborer les différentes tensions nécessaires au fonctionnement d'un avion, comme par exemple une tension de 115 V ou 230 V alternatif à fréquence fixe ou variable, ou encore une tension régulée de 28 V continu destinée aux charges de faible puissance comme les systèmes avioniques ou les calculateurs de commandes de vol.

L'EPDS permet également de séparer, sur des barres de distribution électrique distinctes, les charges dites « essentielles » de celles qui sont « non-essentielles ». On entend par charge essentielle toute charge indispensable pour assurer un bon fonctionnement de l'avion en cas de panne. L'alimentation des charges essentielles permet d'assurer la continuité des opérations en toute sécurité pour l'avion et ses passagers.

A bord d'avions récents, on peut trouver un réseau à haute tension continue, connu dans la littérature anglo-saxonne sont le nom de « High Voltage Direct Current » et appelé par la suite HVDC pour son acronyme anglais. L'EPDS peut générer la tension HVDC obtenue par redressement d'une tension alternative triphasée régulée produite par les générateurs principaux. Une tension HVDC couramment employée est de 540V continu. On envisage également des tensions de 350V et de 270V. La raison principale du développement des réseaux HVDC est leur utilité pour alimenter certaines charges et notamment des moteurs synchrones ou des actionneurs qui ne peuvent fonctionner sans un convertisseur de puissance continu/alternatif. Ce convertisseur est alors alimenté par un réseau HVDC.

Dans le domaine aéronautique commercial, la tendance actuelle est d'augmenter le nombre d'équipements électriques. Certains appareillages hydrauliques sont remplacés par des systèmes électriques comme les commandes de vol. Par ailleurs, le conditionnement d'air de la cabine tend aussi à devenir électrique.

La proportion de charges nécessitant un réseau continu pour leur alimentation ayant tendance à augmenter fortement dans la tendance à l'électrification des avions, certains fabricants d'avions pensent déjà à abandonner les réseaux principaux alternatifs pour réaliser des systèmes de distribution électrique qui seraient majoritairement HVDC. Une norme est en cours d'élaboration pour un futur réseau entièrement HVDC. Comme pour les réseaux alternatifs, les réseaux HVDC doivent être régulés de façon très précise.

Avec la mise en place d'un réseau HVDC, chacun des générateurs conventionnels décrit précédemment est associé à un convertisseur alternatif/continu qui permet de passer de la tension alternative issue du générateur à la tension continue du réseau HVDC. Une batterie haute tension est connectée au réseau HVDC par l'intermédiaire d'un convertisseur continu/continu qui permet de faire l'adaptation entre la tension de la batterie (variable par nature et dépendant de son état de charge) et la tension du réseau HVDC fixe et régulée.

Les réseaux alternatifs présentent plusieurs inconvénients. Tout d'abord, les générateurs principaux alternatifs actuels sont entrainés par les moteurs de propulsion de l'avion et ne peuvent donc pas être connectés en parallèle car leur synchronisation est impossible sauf avec la mise en oeuvre de systèmes de régulation de vitesse au moyen un convertisseur hydraulique de type CSD.

Le dimensionnement des générateurs principaux et des réseaux alternatifs associés tient compte des cas de pannes possibles des moteurs de propulsion. Le sur dimensionnement des générateurs entraine une sous-utilisation de ceux-ci. Par exemple, pour un avion comportant deux moteurs et deux générateurs par moteur, en phase de croisière d'un vol, les générateurs principaux sont utilisés de l'ordre de 30% de leur capacité nominale. La masse des générateurs et du câblage associé à chacun des générateurs est proportionnelle à la puissance installée permettant la capacité nominale des générateurs. Autrement dit, la génération électrique est très pénalisante en termes de masse embarquée.

De même, la présence de la RAT utilisée uniquement en secours est également pénalisante pour la masse embarquée. Sa densité de puissance est très faible, de l'ordre de 0,3 kW/kg. De plus, la RAT ne résout pas tous les cas de fonctionnement en mode secours. par exemple, lorsque l'avion est à vitesse faible, par exemple en phase d'approche et en phase d'atterrissage, la RAT ne peut plus assurer sa fonction secours du fait de la trop faible vitesse de l'avion. Par ailleurs, en cas de perte des deux moteurs de propulsion et de déploiement de la RAT, la génération d'électricité est interrompue pendant le temps nécessaire au déploiement de la RAT et au démarrage de son générateur. L'utilisation de la RAT nécessite des réserves d'énergie hydraulique et électriques, comme des batteries qui permettent de faire fonctionner les systèmes hydrauliques et électriques indispensables à la sécurité du vol, notamment l'alimentation des freins de l'avion.

La présence de l'APU est aussi pénalisante pour la masse embarquée de l'avion. L'APU est surtout utilisé au sol avant le démarrage des moteurs de propulsion entrainant les générateurs principaux. L'APU utilise du kérosène et est très polluant. Dans certains aéroports, munis de services d'alimentation de puissance au sol, l'utilisation de l'APU est très réglementé voire interdit, ce qui rend son utilité à bord d'un avion très discutable. L'installation de l'APU à bord ne se justifie que pour des phases critiques comme la perte des deux moteurs en vol, ce qui peut arriver par exemple lors de l'ingestion d'oiseaux dans les deux moteurs simultanément lors du décollage de l'avion. La RAT ne permettant d'alimenter qu'un nombre d'équipement très limité, le démarrage rapide de l'APU dans ce cas extrême permet de conserver plus d'équipements en fonctionnement améliorant le confort des pilotes pour ramener l'avion au sol en toute sécurité par rapport à un fonctionnement sur RAT ou sur batterie. Certains constructeurs d'avions travaillent également au remplacement de l'APU par des systèmes sans émissions de CO₂ et de gaz toxiques, comme des piles à combustible alimentées par de l'hydrogène produit par électrolyse. Mais cette solution peine à se mettre en place, car il faut encore résoudre les problématiques liées à l'installation de tels dispositifs dans les avions et à l'absence de circuit de de production et distribution l'hydrogène « propre ». En effet, actuellement la majeure partie de l'hydrogène est produite à partir de produits pétroliers.

Concernant l'EPDS, les tensions qu'il délivre doivent répondre à des normes aéronautiques très strictes. Ces normes définissent les niveaux de tension et les fréquences à respecter quel que soit le mode de fonctionnement. Ces normes imposent notamment de réguler les tensions de façon très précise. Dans le cas d'avion mettant en oeuvre des réseaux à fréquence fixe 400 Hz, la régulation de fréquence est de l'ordre du Hz. Pour les tensions alternatives 115 VAC et 230 VAC issues des générateurs électriques, la régulation en tension est réalisée au moyen d'un module de contrôle associé à chacun des générateurs électriques et connu dans la littérature anglo-saxonne sous le nom de GCU pour : « Generator Control Unit ». Dans le cas de réseaux à fréquence fixes utilisant un IDG, la régulation précise impose un CDS extrêmement précis et donc couteux.

Les charges alimentées par les tensions délivrées par l'EPDS doivent également respecter des règles précises. Le rejet d'harmoniques doit notamment rester en dessous en dessous d'un gabarit normalisé. Ce gabarit étant extrêmement contraignant, la présence de filtres associé à chaque charge et assurant la compatibilité du réseau et de la charge qu'il alimente est obligatoire. Les tolérances serrées tendent à compliquer et à alourdir ces filtres. Dans certains cas, un filtre peut être aussi lourd que sa charge associée.

Enfin, les normes que doivent respecter les réseaux ne permettent pas aux charges alimentées par ces réseaux de renvoyer de l'énergie sur le réseau électrique. Il est donc impossible de penser à récupérer l'énergie perdue sur les charges réversibles de plus en plus nombreuses, comme les moteurs. Actuellement chaque charge fonctionnant de façon réversible doit embarquer dans son convertisseur associé des dispositifs de dissipation passive de l'énergie régénérée.

Les réseaux continus HVDC présentent également plusieurs inconvénients. Les réseaux continus HVDC résolvent un certain nombre d'inconvénients des réseaux alternatifs, notamment en permettant la mise en parallèle des générateurs. Cette mise en parallèle permet d'améliorer le taux d'utilisation des générateurs en phase de croisière et donc de réduire le rapport entre la puissance électrique installée et la puissance nominale consommée par l'avion.

Cependant, les générateurs tournants qui demeurent alternatifs et la mise en oeuvre de réseaux continus HVDC impose de redresser la tension alternative triphasée des générateurs et donc d'embarquer des convertisseurs supplémentaires pour redresser la tension des générateurs.

De plus, la plupart des charges embarquées fonctionnant avec une tension alternative, il est nécessaire reconvertir la tension HVDC en tension alternative utilisable pour les charges, d'où la présence de très nombreux convertisseurs continu/alternatif. Tous ces convertisseurs, compte tenu des puissances embarquées de plus en plus élevées, nécessitent l'adjonction de systèmes de refroidissement à air ou de boucles liquides ce qui vient encore aggraver le bilan masse de l'avion. Enfin, l'ajout de ces nombreux convertisseurs tendent à dégrader la fiabilité et la disponibilité des systèmes électriques avions, en comparaison d'architectures électriques alternatives, certes plus rustiques, mais aussi plus fiables.

La demande de brevet WO 2007/113312 déposée au nom de la demanderesse propose d'optimiser la masse globale des convertisseurs, en les mutualisant. En effet, à bord d'un avion, certains convertisseurs dédiés ne sont utilisés que durant de courtes périodes et il est donc avantageux d'en mutualiser l'utilisation. Cependant cette mutualisation pose par ailleurs des problèmes liés à la certification, car il est nécessaire de démontrer que la mutualisation ne vient pas affecter la sécurité des systèmes avions. Cette contrainte est notamment précisée dans la norme D0297. De plus, la mutualisation impose des systèmes annexes tels que des matrices de contacteurs dégradant le bilan de masse embarquée.

Comme pour les réseaux alternatifs, les normes régissant les réseaux HVDC sont également très strictes. Les charges connectées à ces réseaux doivent intégrer des filtres évitant d'y renvoyer des perturbations. Toujours comme pour les réseaux alternatifs, les charges ne peuvent y renvoyer de l'énergie. Les charges régénératives doivent donc être équipées de moyens de dissipation de l'énergie régénérée.

L'invention vise à pallier tout ou partie des problèmes cités plus haut en proposant une nouvelle architecture électrique comprenant un réseau électrique secondaire non régulé capable de recevoir de l'énergie de tout type d'équipement, des générateurs principaux et aussi de charges régénératives. Ce réseau électrique secondaire permet également le stockage temporaire d'énergie. Le réseau électrique secondaire sert de tampon permettant d'y stocker de l'énergie notamment issue du sur dimensionnement des générateurs principaux et permettant d'alimenter les réseaux principaux durant certains pics de consommation.

A cet effet, l'invention a pour objet une architecture électrique d'un aéronef comprenant :
- plusieurs générateurs principaux chacun associé à un moteur de propulsion de l'aéronef, chacun des générateurs principaux étant configuré pour délivrer une puissance nominale,
- plusieurs réseaux électriques principaux chacun associé à un générateur principal en régime nominal et fonctionnant à une première tension nominale,
- un réseau électrique secondaire monobloc fonctionnant dans une plage de tension dont la valeur minimale est au moins égale au double de la valeur de la première tension nominale,
- un dispositif d'accumulation d'énergie électrique directement raccordé au réseau secondaire,
- un premier convertisseur d'énergie électrique disposé entre le réseau électrique secondaire et un premier des réseaux électriques principaux permettant le transfert d'énergie du premier des réseaux électriques principaux vers le réseau électrique secondaire, le premier convertisseur d'énergie électrique étant destiné à fournir de l'énergie électrique au dispositif d'accumulation d'énergie électrique en régime nominal,
- un second convertisseur d'énergie électrique disposé entre le réseau électrique secondaire et un second des réseaux électriques principaux permettant le transfert d'énergie, en régime nominal, du réseau électrique secondaire vers le second des réseaux électriques principaux,
le dispositif d'accumulation d'énergie électrique et le second convertisseur d'énergie électrique étant configurés pour permettre la fourniture au second des réseaux électriques principaux d'une puissance au moins égale à la moitié de la puissance nominale d'un des générateurs principaux.

Architecture électrique peut comprendre en outre :
- au moins un réseau continu basse tension régulé dont la tension nominale est sensiblement comprise entre 24 et 30 V, le réseau continu basse tension étant distinct du réseau électrique secondaire monobloc,
- au moins une batterie raccordée au réseau continu basse tension,
- un troisième convertisseur d'énergie électrique permettant d'alimenter le réseau continu basse tension à partir d'un des réseaux électriques principaux,
- un quatrième convertisseur d'énergie électrique permettant d'alimenter un des réseaux électriques principaux auquel sont raccordées des charges essentielles de l'aéronef.

Les réseaux électriques principaux peuvent être régulés et le réseau électrique secondaire est avantageusement un réseau à tension continue dont la tension est fixée par le dispositif d'accumulation d'énergie électrique.

Le réseau électrique secondaire monobloc peut être configuré pour fonctionner en régime nominal à sa tension nominale dont la valeur peut varier dans un rapport de 1 à 3.

Le premier convertisseur d'énergie électrique possède avantageusement une puissance nominale plus faible que la puissance nominale du second convertisseur d'énergie électrique.

Une charge régénérative peut être raccordée au réseau électrique secondaire par l'intermédiaire d'un convertisseur bidirectionnel sans passer par l'intermédiaire d'un des réseaux électriques principaux.

Au moins un groupe de génération électrique indépendant de moteur de propulsion de l'aéronef peut être raccordé au réseau électrique secondaire sans passer par l'intermédiaire d'un des réseaux électriques principaux.

Un réseau électrique cabine de type domestique peut être raccordé au réseau électrique secondaire par l'intermédiaire d'un troisième convertisseur d'énergie électrique sans passer l'un des réseaux électriques principaux.

L'architecture électrique peut comprendre un réseau électrique essentiel permettant d'alimenter des charges essentielles de l'aéronef, le second convertisseur d'énergie électrique pouvant alimenter le réseau électrique essentiel.

L'architecture électrique peut comprendre un système de distribution de puissance électrique et un module de contrôle du réseau électrique secondaire échangeant des informations pour piloter les convertisseurs d'énergie électrique.

Le premier et le second convertisseurs d'énergie électrique comprennent avantageusement chacun un transformateur disposant d'une isolation renforcée.

Le second convertisseur d'énergie électrique est avantageusement raccordé au second réseau électrique principal au travers d'un interrupteur électronique à base de semi-conducteur permettant au réseau électrique secondaire monobloc de fournir un courant de court-circuit vers une charge raccordée au second réseau électrique principal.

L'invention sera mieux comprise et d'autres avantages apparaîtront à la lecture de la description détaillée d'un mode de réalisation donné à titre d'exemple, description illustrée par le dessin joint dans lequel :
la figure 1 représente schématiquement un exemple d'architecture électrique selon l'invention adaptée à un avion commercial ;
la figure 2 représente un exemple d'architecture électrique selon l'invention plus précis et adapté à des réseaux principaux alternatifs ;
les figures 3 et 4 représentent des exemples d'architecture électrique selon l'invention dans lesquels des équipements sont redondés.

Par souci de clarté, les mêmes éléments porteront les mêmes repères dans les différentes figures.

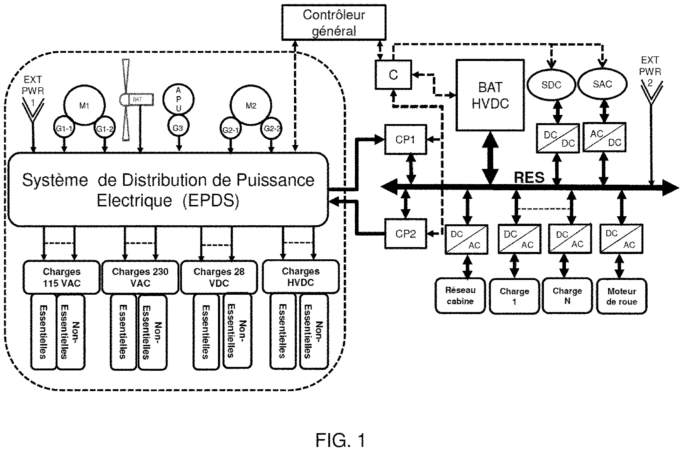

La figure 1 représente un exemple d'architecture électrique selon l'invention La figure 1 représente une architecture électrique d'un avion commercial bimoteur. Chacun des moteurs de propulsion M1 et M2 entraine deux générateurs électriques : G1.1 et G1.2 pour le moteur M1 et G2.1 et G2.2 pour le moteur M2. L'invention peut être mise en oeuvre quel que soit le nombre de moteurs de propulsion et quel que soit le nombre de générateurs électriques par moteur. L'invention peut être mise en oeuvre pour d'autres types d'aéronefs et par exemple pour des aéronefs à voilure tournante.

Dans l'exemple représenté, d'autres générateurs électriques tels qu'un générateur G3 entrainé par un APU et une RAT sont présents dans l'avion. Ces générateurs, auxiliaire (APU) et de secours (RAT) ne sont pas obligatoires dans l'invention comme on le verra plus loin. L'architecture électrique comprend un système de distribution de puissance électrique EPDS recevant de l'énergie électrique de l'ensemble de ces générateurs. A chaque générateur, notamment les générateurs associés au moteurs de propulsion et appelés générateurs principaux, est associé un réseau, également appelé réseau principal. Les réseaux principaux, non représentés sur la figure 1, appartiennent à l'EPDS. L'EPDS distribue à son tour l'énergie qu'il reçoit à différents charges de l'avion. Sur la figure 1, les charges ont été regroupées par type de réseau les alimentant : les charges 115 V alternatif, les charges 230 V alternatif, les charges 28 V continu et les charges alimentées par une haute tension continu HVDC. Ces quatre types de charges ne sont donnés qu'à titre d'exemple. L'invention peut être mise en oeuvre quel que soit le nombre de type de réseaux différents. Certains avions peuvent n'être équipés que d'un type de réseau. De plus, les réseaux alternatifs peuvent être à fréquence fixe, par exemple 400 Hz ou a fréquence variable par exemple entre 400 Hz et 800 Hz. Parmi les charges certaines sont qualifiées d'essentielles ou critiques et d'autres de non-essentielles. Les charges essentielles comprennent toute charge indispensable pour assurer un bon fonctionnement de l'avion en cas de panne. Parmi les charges essentielles, on trouve notamment certains calculateurs et les commandes de vol. Parmi les charges non-essentielles, on trouve notamment les charges dites commerciales qui permettent d'assurer le service des passagers à bord de la cabine passager. Les charges non-essentielles peuvent être délestées en cas de nécessité.

De nombreux aéroports permettent aux avions de se raccorder sur un groupe de parc délivrant généralement une tension de 115 V 400 Hz. L'architecture comprend une prise EXT PWR 1 permettant de raccorder l'EPDS au groupe de parc. Les avions récents équipés de réseaux principaux 230 V 400 Hz doivent embarquer à bord un convertisseur permettant de transformer la tension de 115 V en 230 V. Ce convertisseur représente une masse inutile en vol.

Les générateurs, l'EPDS et les charges sont communément embarqués dans un avion ne mettant pas l'invention en oeuvre. Cette structure est conservée dans l'invention.

Selon l'invention l'architecture électrique comprend un réseau électrique secondaire RES venant en complément des réseaux électriques principaux de l'avion. Les réseaux électriques principaux sont directement alimentés par les générateurs principaux de l'avion. Le réseau électrique secondaire RES est qualifié de monobloc. Plus précisément, le réseau électrique secondaire RES ne comprend aucun contacteur permettant d'en dissocier des parties. Le réseau électrique secondaire RES est formé d'une barre de distribution ou barre bus monobloc. Le réseau électrique secondaire RES est considéré comme un noeud électrique non reconfigurable et non sécable. Les équipements raccordés à ce réseau peuvent être déconnectés en cas de panne.

Dans l'exemple représenté sur la figure 1, le réseau électrique secondaire RES est un réseau HVDC à haute tension continue. Il est également possible de mettre en oeuvre l'invention avec un réseau électrique secondaire en tension alternative.

L'architecture électrique comprend un dispositif d'accumulation d'énergie électrique BAT-HVDC. Tout type de dispositif d'accumulation d'énergie électrique peut être mis en oeuvre dans le cadre de l'invention. Les batteries d'accumulateurs pouvant stocker de l'énergie sous forme chimique et la restituer sous forme électrique sont bien entendu possible. On peut également mettre en oeuvre à la place ou en complément de la batterie, tout dispositif capable de stocker de l'énergie sous une forme physique quelconque notamment électrique, mécanique, thermique et de la restituer sous forme électrique, tel que par exemple un super condensateur ou un volant d'inertie. Il est possible de mettre en oeuvre un dispositif d'accumulation d'énergie électrique accumulant et délivrant de l'énergie sous forme d'une tension alternative. Ce type de dispositif d'accumulation d'énergie électrique est adapté un réseau électrique secondaire en tension alternative.

Le dispositif d'accumulation d'énergie électrique BAT-HVDC est directement raccordé au réseau secondaire sans convertisseur d'énergie électrique et sans passer par l'intermédiaire d'un des réseaux électriques principaux. Autrement dit, c'est tension du dispositif d'accumulation d'énergie électrique BAT-HVDC qui impose celle du réseau électrique secondaire RES. Dans un réseau HVDC classique régulé, il est impossible de raccorder directement une batterie sur ce réseau. En effet, la tension de la batterie fluctue dans une grande proportion, principalement en fonction de son niveau de charge. Un convertisseur d'énergie doit être disposé entre la batterie et le réseau classique, notamment pour adapter le niveau de tension. A titre d'exemple une batterie HVDC de type lithium-ion peut voir sa tension varier typiquement de plusieurs centaines de volts en fonctionnement, par exemple entre 230V et 500V en fonction de son niveau de charge. Typiquement, pour des aéronefs équipés de réseaux alternatifs triphasés 115V, la tension minimale de fonctionnement du réseau électrique secondaire RES est de 230V et pour des aéronefs équipés de réseaux alternatifs triphasés 230V, la tension minimale de fonctionnement du réseau électrique secondaire RES est de 460V. De façon plus générale, la tension minimale de fonctionnement en régime nominal du réseau électrique secondaire RES est avantageusement au moins égale au double de la valeur de la tension nominale des réseaux AC1 et AC2. Les réseaux classiques mis en oeuvre dans les avions commerciaux sont régulés. Les variations de tension autorisées sur ces réseaux sont de l'ordre du volt. Au contraire, pour le réseau électrique secondaire RES aucune régulation spécifique n'est effectuée à l'intérieur d'une plage dans laquelle la tension du dispositif d'accumulation d'énergie électrique BAT-HVDC peut évoluer en fonctionnement normal. La plage de tension du réseau électrique secondaire RES est simplement bornée pour éviter une trop profonde décharge ou une surcharge inacceptable du dispositif d'accumulation d'énergie électrique BAT-HVDC. Il est par exemple possible de configurer le réseau électrique secondaire RES pour autoriser une variation de sa tension de fonctionnement en régime nominal, c'est-à-dire sans panne, dans un rapport de 1 à 3.

Le réseau électrique secondaire RES peut échanger de l'énergie avec l'EPDS. A cet effet, l'architecture comprend deux convertisseurs d'énergie électrique CP1 et CP2 disposés entre le réseau électrique secondaire RES et l'EPDS. Le convertisseur CP1 est configuré pour assurer le transfert d'énergie d'un des réseaux électriques principaux vers le réseau électrique secondaire RES en régime nominal et le convertisseur CP2 est configuré pour assurer le transfert d'énergie du réseau électrique secondaire RES vers un autre des réseaux électriques principaux. Les deux convertisseurs sont distincts et peuvent fonctionner simultanément. Un des réseaux principaux peut fournir de l'énergie au réseau électrique secondaire RES, notamment lorsque le générateur principal associé à ce réseau principal est sous utilisé. Durant le vol de l'avion, en phase de croisière et en fonctionnement nominal, les générateurs principaux sont sous-utilisés, cela signifie que l'on dispose presque en permanence d'une puissance de génération disponible permettant de fournir de l'énergie au réseau électrique secondaire RES et donc de recharger dispositif d'accumulation d'énergie électrique BAT-HVDC quasiment en continu. Par régime nominal, on entend un fonctionnement de l'avion dans ses phases de vol de croisière sans aucune panne. Chacun des générateurs G1.1, G1.2, G2.1, G2.2 et G3 a la possibilité de fournir de l'énergie au réseau électrique secondaire RES. Un jeu de contacteurs dont un exemple est donné plus loin permet de connecter un des générateurs au réseau électrique secondaire RES. Un autre des réseaux principaux peut recevoir de l'énergie du réseau électrique secondaire RES par exemple en cas de pic de consommation des charges associées à cet autre réseau principal, des pics de consommation pouvant intervenir en régime nominal.

Il est possible de prévoir dans l'architecture électrique plusieurs réseaux électriques secondaires RES connectés chacun à dispositif d'accumulation d'énergie électrique BAT-HVDC et à deux convertisseurs CP1 et CP2.

L'architecture comprend un module de contrôle C du réseau électrique secondaire RES. Le module de contrôle C pilote les convertisseurs CP1 et CP2 ainsi que le dispositif d'accumulation d'énergie électrique BAT-HVDC. L'architecture électrique peut également comprendre un contrôleur général de l'ensemble de l'architecture électrique de l'avion. Le contrôleur général pilote à la fois l'EPDS et le module de contrôle C. Physiquement le module de contrôle C et le contrôleur général peuvent être regroupés au sein d'un même calculateur. Alternativement, pour des raisons de sécurité, il peut être avantageux de ségréguer les fonctions du module de contrôle C et du contrôleur général, par exemple pour permettre le découplage complet de l'EPDS et du réseau électrique secondaire RES.

Dans le cas où le dispositif d'accumulation d'énergie électrique BAT-HVDC est une batterie d'accumulateur, le fonctionnement du convertisseur CP1 peut être très proche de celui d'un chargeur de batterie adapté à la technologie de la batterie. Le convertisseur CP1 peut comprendre un ou plusieurs contacteurs en entrée côté EPDS permettant de choisir le générateur auquel le convertisseur CP1 est raccordé. Le convertisseur CP1 comprend en outre un transformateur redresseur par exemple formé d'un transformateur isolé entre primaire et secondaire, d'un redresseur électronique à diodes et d'un régulateur de courant en sortie côté réseau électrique secondaire RES. Afin d'assurer une ségrégation suffisante du réseau électrique secondaire RES et de l'EPDS, le transformateur peut disposer d'une isolation renforcée afin d'éviter une propagation non désirée entre la tension régulée du réseau principal et la tension non régulée du réseau électrique secondaire RES. Le transformateur peut disposer de moyens de détection de la perte d'isolement entre primaire et secondaire comme par exemple décrit dans la demande de brevet EP 3 499 254 A1 déposée au nom de la demanderesse. La détection de perte d'isolement peut alors agir sur les contacteurs situés en entrée du convertisseur CP1. Pour des questions de disponibilité, le convertisseur CP1 peut posséder une architecture redondée. D'autres réalisations du convertisseur CP1 sont bien entendu possibles dans le cadre de l'invention.

Le convertisseur CP2 est adapté à la tension du réseau électrique secondaire RES et à la tension ou aux tensions du ou des réseaux principaux auxquels le réseau électrique secondaire RES est susceptible de fournir de l'énergie. La tension du réseau électrique secondaire RES peut être alternative ou continue, de même que la ou les tensions du ou des réseaux principaux.

Le convertisseur CP2 peut comprendre un ou plusieurs contacteurs en sortie, côté EPDS permettant de choisir le réseau principal auquel le convertisseur CP2 est raccordé. Le convertisseur CP2 peut comprendre un étage de type onduleur électronique qui permet d'élaborer à partir de la tension du réseau électrique secondaire RES, une tension compatible de la tension du réseau auquel le convertisseur CP2 est raccordé. Par tension compatible, on entend principalement une tension de même amplitude, de même fréquence, synchronisée en phase et respectant les normes imposées pour les générateurs principaux. Le convertisseur CP2 peut comprendre en sortie un transformateur d'isolement permettant d'avoir une ségrégation complète entre le réseau électrique secondaire RES et l'EPDS. Comme pour le convertisseur CP1, le transformateur du convertisseur CP2 peut disposer d'une isolation renforcée et de moyens de détection de la perte d'isolement entre primaire et secondaire. Pour des questions de disponibilité, le convertisseur CP2 possède une architecture avantageusement redondée. Comme pour le convertisseur CP1, d'autres types de réalisation sont envisageables pour le convertisseur CP2.

Par exemple, lorsque l'EPDS comprend un ou plusieurs réseaux alternatifs, il est avantageux de choisir un dispositif d'accumulation d'énergie électrique BAT-HVDC de tension nominale égale à une tension redressée directement à partir du réseau alternatif afin d'éviter l'utilisation d'un élévateur de tension pour le convertisseur CP1. Par exemple à partir d'un réseau alternatif triphasé 115V, on peut choisir un dispositif d'accumulation d'énergie électrique BAT-HVDC de tension nominale égale à 270V continu et 540V continu pour un réseau alternatif triphasé 230V.

Le transfert d'énergie au travers du convertisseur CP1, d'un des réseaux de l'EPDS vers le réseau électrique secondaire RES, pouvant être réalisé durant une grande partie de la durée d'un vol et notamment durant toute la phase de croisière, le convertisseur CP1 peut être de plus faible puissance nominale que le convertisseur CP2 pouvant être appelé à fournir de l'énergie de façon plus importante pendant des durées courtes. Par exemple, dans une architecture classique, les générateurs principaux sont dimensionnés pour permettre la production d'énergie dans des cas de pannes tels que par exemple un court-circuit intervenant sur une charge. Entre l'instant où le court-circuit apparait et l'instant où une protection se déclenche pour isoler l'équipement en court-circuit, le générateur associé doit pouvoir fournir ce courant de court-circuit. En mettant en oeuvre l'invention, il est possible d'assurer la fourniture momentanée du courant de court-circuit au moyen du réseau électrique secondaire RES en complément du générateur principal associé à l'équipement défectueux. Lors de la fourniture complémentaire d'énergie par le réseau électrique secondaire RES, le convertisseur CP2 est synchronisé avec le générateur qu'il soutient. Autrement dit, la mise en oeuvre de l'invention permet de limiter le sur dimensionnement des générateurs principaux en utilisant le réseau électrique secondaire RES pour certains pics de consommation électrique. Ces pics utilisent le convertisseur CP2 qui est alors dimensionné à cet effet, avec par exemple une puissance nominale supérieure à celle du convertisseur CP1.

Hormis l'alimentation des charges de l'avion lors de pics de consommation, l'énergie du réseau électrique secondaire RES peut trouver d'autres utilités.

En cas de panne d'un ou plusieurs générateurs principaux, par exemple en cas de perte d'un ou des deux moteurs de propulsion de l'avion, vu de l'EPDS, le convertisseur CP2 vient se substituer à un ou plusieurs générateurs défaillants. De façon intermédiaire entre un fonctionnement nominal et une perte complète d'un ou plusieurs générateurs, le réseau électrique secondaire RES peut pallier un échauffement momentané d'un générateur principal ou un risque de pompage du moteur entrainant le générateur principal. Le risque de pompage intervient notamment lorsque le moteur tourne au ralenti, la majeure partie de la puissance mécanique qu'il délivre est utilisé pour la génération électrique. Des variations temporelles de consommation électrique interviennent fréquemment. Une variation brutale de consommation électrique, peut entrainer un à-coup de vitesse du moteur, voire même son calage. De façon plus générale, le réseau électrique secondaire RES permet de délester partiellement ou en totalité et de façon ponctuelle un des générateurs du réseau de distribution principal en fournissant le complément de puissance nécessaire.

Il est possible de raccorder certaines charges de l'avion, repérées « charge 1 » à « charge N » sur la figure 1, au réseau électrique secondaire RES sans passer par les réseaux principaux. Il est notamment intéressant de raccorder des charges pouvant régénérer de l'énergie, comme par exemple des moteurs électriques, comme par exemple des inverseurs de poussée électrique ou des moteurs électriques de roue. Le raccordement de ce type de charge au réseau électrique secondaire RES permet aux charges de fournir l'énergie régénérée au réseau électrique secondaire RES. Cette énergie peut recharger le dispositif d'accumulation d'énergie électrique BAT-HVDC ou transiter par le convertisseur CP2 pour alimenter d'autres charges de l'avion. Contrairement aux réseaux principaux ne permettant pas l'utilisation d'énergie régénérée, la mise en oeuvre d'un réseau électrique secondaire RES non régulé autorise facilement la récupération d'énergie.

Parmi les charges représentées sur la figure 1, on peut notamment citer un réseau cabine. Il s'agit d'un réseau mis à la disposition, notamment des passagers, par exemple pour recharger leurs appareils électroniques portables, téléphones ou ordinateurs. Le réseau met en oeuvre des tensions dites domestiques et couramment employées dans l'habitat, par exemple 220V 50 ou 60 Hz. Un tel réseau permet également de raccorder des équipements de type four permettant le réchauffage de repas servis à bord. De tels équipements alimentés en tension domestique sont beaucoup moins onéreux que des équipements spécifiquement adaptés à des tensions portées par les réseaux principaux de l'avion. Le réseau cabine est avantageusement alimenté par le réseau électrique secondaire RES sans passer par les réseaux principaux. L'alimentation du réseau cabine par le réseau électrique secondaire RES permet notamment d'éviter les coupures momentanées lorsque les réseaux principaux changent de générateur, ce qui est notamment le cas lors du transfert de génération de puissance de l'APU vers un générateur principal.

Des moteurs électriques de roue peuvent également être alimentés par le réseau électrique secondaire RES sans passer par les réseaux principaux. Les moteurs de roues de l'avion permettent de le déplacer en mode e-taxi.

De façon générale, dans un avion possédant des réseaux principaux alternatifs et sans réseau électrique secondaire RES, la plupart des charges alternatives nécessitent un redresseur suivi d'un onduleur pour assurer leur alimentation. Le redresseur souvent appelé ATRU pour son acronyme anglais (Auto-Transformer Rectifier Unit) doit pouvoir véhiculer toute la puissance instantanée nécessaire au fonctionnement des charges qui y sont connectées ce qui alourdit la masse de l'aéronef. L'alimentation de ces charges au moyen d'un réseau électrique secondaire RES fonctionnant en courant continu permet de se passer d'un ATRU aussi encombrant. La fonction redresseur est alors assurée par le convertisseur CP1 dont le dimensionnement est réalisé en fonction de la puissance moyenne consommée et non pas en fonction de la puissance maximale consommée par les charges, le dispositif d'accumulation d'énergie électrique BAT-HVDC assurant l'alimentation des charges durant leur pics de consommation.

Pour une architecture électrique intégrant, lors de sa conception, un réseau électrique secondaire RES, l'invention permet de dimensionner les générateurs principaux en fonction de la puissance moyenne que consomme l'ensemble des charges de l'avion et d'une puissance nécessaire à la charge du dispositif d'accumulation d'énergie électrique BAT-HVDC. Il n'est pas nécessaire de dimensionner les générateurs principaux en fonction de la puissance maximale consommée par les charges, notamment lors de pics de consommation. Le dispositif d'accumulation d'énergie électrique BAT-HVDC et le convertisseur CP2 sont quant à eux dimensionnés pour alimenter les réseaux principaux lors des pics de consommation en complément de la puissance délivrée par les générateurs principaux. Il est également possible de mettre en oeuvre l'invention dans une architecture électrique existante où les générateurs principaux ont été dimensionnés pour assurer les pics de consommation. Sans changer les générateurs existants, la modification d'une architecture électrique existante, en y intégrant un réseau électrique secondaire RES et un dispositif d'accumulation d'énergie électrique BAT-HVDC, permet d'ajouter facilement des fonctions supplémentaires comme notamment, la fonction e-taxi, le réseau cabine, la récupération d'énergie de charges pouvant régénérer de l'énergie et le transfert d'alimentation d'une charge d'un générateur à un autre sans coupure, comme on l'a vu plus haut.

Au réseau électrique secondaire RES, il est possible de raccorder des générateurs électriques repérés SDC et SAC sur la figure 1. Les générateurs SDC et SAC sont raccordés au réseau électrique secondaire RES au moyen de convertisseurs spécifiques sans passer par les réseaux principaux. Le générateur SDC fournit une tension continue et est raccordé au réseau électrique secondaire RES par l'intermédiaire d'un convertisseur continu/continu. Ce convertisseur est nécessaire car la tension du réseau électrique secondaire RES est imposée par le dispositif d'accumulation d'énergie électrique BAT-HVDC. Le convertisseur continu/continu permet d'adapter la tension de sortie du générateur SDC à la tension du réseau électrique secondaire RES. Le générateur SAC fournit une tension alternative monophasée ou polyphasée et est raccordé au réseau électrique secondaire RES par l'intermédiaire d'un convertisseur alternatif/continu. Les générateurs SDC et SAC sont pilotés par le module de contrôle C. Tout type de générateur électrique peut être raccordé au réseau électrique secondaire RES. Les générateurs peuvent des machines électriques mues par des moteurs thermiques. D'autres types de générateurs notamment basées sur des énergies renouvelables comme des piles à combustible ou des panneaux photovoltaïques peuvent être raccordés au réseau électrique secondaire RES. Il est avantageux de raccorder au réseau électrique secondaire RES des générateurs indépendants des moteurs de propulsion de l'avion

En complément, le réseau électrique secondaire RES peut recevoir de l'énergie au travers d'une prise de parc EXT PWR 2 adaptée à un groupe de parc présent à bord d'aéroports. La prise de parc EXT PWR 2 est raccordée au réseau électrique secondaire RES sans passer par un des réseaux principaux de l'avion. Le raccordement à un groupe de parc par la prise EXT PWR 2 permet par exemple une recharge rapide du dispositif d'accumulation d'énergie électrique BAT-HVDC lorsque l'avion est en escale. En mettant en oeuvre un réseau électrique secondaire RES à tension alternative 115 V 400 Hz, il est possible d'utiliser les groupes de parc communément installés à ce jour. Pour des réseaux électriques secondaires RES à tension continue HVDC, il serait possible de prévoir des groupes de parc adaptés à cette tension HVDC.

Il est possible de raccorder directement au réseau électrique secondaire RES, des générateurs déjà présents dans l'avion comme l'APU et la RAT sans les raccorder directement aux réseaux principaux. En effet, en fonctionnement nominal, l'APU et la RAT sont rarement utilisés. L'APU n'est quasiment utilisé qu'au sol et la RAT n'est utilisée qu'en secours. En les raccordant au réseau électrique secondaire RES, il serait possible de les utiliser, notamment pour l'APU, de façon plus rationnelle, notamment pour recharger le dispositif d'accumulation d'énergie électrique BAT-HVDC pendant certaines phases de vol. Si le niveau de charge du dispositif d'accumulation d'énergie électrique BAT-HVDC le permet, les fonctions électriques remplies par l'APU au sol et par la RAT en secours pourraient être assurées par le dispositif d'accumulation d'énergie électrique BAT-HVDC au travers du réseau électrique secondaire RES. La mise en oeuvre de l'invention permet donc de se passer des générateurs électriques de la RAT et de l'APU ou d'au moins un des deux.

Les générateurs raccordés au réseau électrique secondaire RES se comportent comme des sources de courant venant injecter du courant dans le dispositif d'accumulation d'énergie électrique BAT-HVDC. Les charges connectées au réseau électrique secondaire RES se comportent également comme des sources de courant venant soutirer de la puissance dans le dispositif d'accumulation d'énergie électrique BAT-HVDC.

Le module de contrôle C du réseau électrique secondaire RES récupère au travers du contrôleur général des informations provenant de l'EPDS sur un bus de communication sécurisé. Ces informations comportent entre autres des informations utiles pour la gestion du réseau électrique secondaire RES, par exemple des informations concernant la capacité et la disponible des différents générateurs connectés l'EPDS, ou encore l'état de la configuration des différents éléments l'EPDS au travers de l'état des différents contacteurs de l'EPDS.

Le bus de communication peut échanger d'autres informations utiles au fonctionnement du réseau électrique secondaire RES comme les caractéristiques en tension et fréquence des sorties des générateurs raccordés à l'EPDS, afin de permettre au convertisseur CP2 d'injecter la bonne tension, en amplitude, en fréquence et en phase, dans le réseau de distribution régulé de l'EPDS auquel il est raccordé. Au travers de ce bus de communication, le contrôleur général peut demander à l'EPDS de modifier sa configuration et notamment l'état des contacteurs appartenant à l'EPDS.

Le module de contrôle C communique avec le dispositif d'accumulation d'énergie électrique BAT-HVDC au travers d'un bus de communication, afin d'en connaître par l'état de charge (SOC : State of charge en anglais) et l'état de santé (SOH : State of Health en anglais). Le module de contrôle C communique également avec les convertisseurs CP1 et CP2 pour échanger des consignes de puissance et de tension au travers d'un autre bus de communication.

Lorsque des générateurs électriques, notamment les générateurs SDC et SAC, et lorsque des charges sont raccordés au réseau électrique secondaire RES sans passer par les réseaux principaux de l'avion, le module de contrôle C peut communiquer avec ces différents équipements au travers de bus de communications.

Le module de contrôle C et le contrôleur général peuvent être mis en oeuvre au moyen de calculateurs modulaires couramment employés en aéronautique. Ce type de calculateur est connu dans la littérature anglo-saxonne sont le nom de « Integrated Modular Avionics » ou IMA pour son acronyme. D'autres architectures de contrôle du réseau électrique secondaire RES et des équipements qui lui sont raccordés peuvent être mises en oeuvre dans le cadre de l'invention.

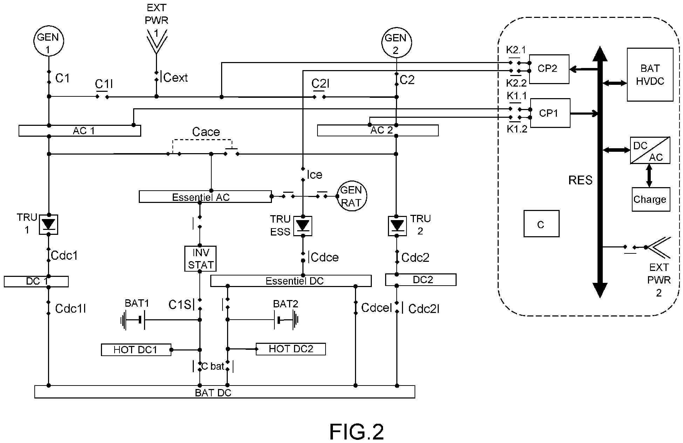

La figure 2 représente un exemple d'architecture électrique selon l'invention adapté à la présence de deux réseaux principaux alternatifs AC1 et AC2 à tension régulée. L'architecture comprend deux générateurs principaux GEN1 et GEN2. L'architecture peut également être alimentée par un groupe de parc dont la prise est référencée EXT PWR 1. En régime nominal, le générateur GEN1 alimente le réseau AC1 par le contacteur C1 et le générateur GEN2 alimente le réseau AC2 par le contacteur C2. La prise de parc EXT PWR 1 peut être connectée au réseau AC1 par les contacteurs Cext et C1I et peut être connectée au réseau AC2 par les contacteurs Cext et C2I. Un réseau Essentiel AC est alimenté soit par le réseau AC1, soit par le réseau AC2 au travers d'un jeu de contacteur Cace. Le réseau Essentiel AC permet notamment d'alimenter les charges essentielles nécessitant une tension d'alimentation alternative. En vol, en cas de perte des deux générateurs principaux, GEN1 et GEN2, le réseau Essentiel AC est alimenté par l'éolienne de secours RAT.

Dans l'architecture électrique de la figure 2, on retrouve également plusieurs réseaux continus basse tension régulés dont la tension nominale est de 28V. En pratique, la régulation de tension autorise la tension nominale de ces réseaux à varier sensiblement entre 24 et 30V. Dans les avions commerciaux à deux réseaux principaux alternatifs AC1 et AC2 et un réseau Essentiel AC, sont associés respectivement deux réseaux continus DC1 et DC2 ainsi qu'un réseau Essentiel DC destiné à alimenter en basse tension 28V des charges essentielles. Les réseaux DC1 et DC2 permettent, quant à eux, d'alimenter des charges non essentielles et pouvant être délestées sans altérer la sécurité du vol. Les réseaux continus DC1, DC2 et Essentiel DC sont respectivement alimentés par les réseaux alternatifs AC1, AC2 et Essentiel AC au travers de convertisseurs alternatif/continu, respectivement TRU 1, TRU 2 et TRU ESS, comme par exemple des transformateurs associés à des redresseurs, souvent appelés TRU pour leur acronyme anglais (Transformer Rectifier Unit) et au travers de contacteurs, respectivement Cdc1, Cdc2 et Cdce. A chaque TRU, il est possible d'associer un régulateur et des filtres afin d'obtenir une tension continue respectant les normes aéronautiques prescrites.

Les trois réseaux continus DC1, DC2 et Essentiel DC sont reliés à des batteries BAT1 et BAT2, elles aussi basse tension, par l'intermédiaire d'intermédiaire d'un réseau batterie BAT DC et de contacteurs respectivement Cdc1I, Cdc2I et Cdcel. Associé à chacune des deux batteries BAT1 et BAT2, l'architecture peut comprendre un réseau continu, respectivement HOT DC1 et HOT DC1, relié sans contacteur à sa batterie respective BAT1 et BAT2. Une des batteries, par exemple la batterie BAT1, peut alimenter le réseau Essentiel AC au travers d'un convertisseur continu/alternatif INV STAT notamment en cas de panne des générateurs principaux GEN1 et GEN2. Le convertisseur INV STAT est dimensionné pour n'alimenter que certaines des charges essentielles alimentées par le réseau Essentiel AC. Sa puissance nominale est très inférieure à la puissance nominale d'un des générateurs principaux, typiquement quelques kilowatts. L'autre batterie BAT2 peut alimenter le réseau Essentiel DC lorsque celui-ci n'est pas alimenté par le convertisseur TRU ESS.

Dans l'architecture de la figure 2, on retrouve le réseau électrique secondaire RES, les deux convertisseurs CP1 et CP2 ainsi que le dispositif d'accumulation d'énergie électrique BAT-HVDC raccordés directement au réseau électrique secondaire RES. A la différence du convertisseur INV STAT, le convertisseur CP2 est dimensionné pour alimenter à la fois les charges essentielles reliées au réseau Essentiel AC et également les charges non essentielles au travers des réseaux AC1 et AC2. Le réseau électrique secondaire RES est distinct des réseaux continus basse tension décrit plus haut. On retrouve également une charge éventuellement régénérative raccordée au réseau électrique secondaire RES par l'intermédiaire d'un convertisseur continu/alternatif. On retrouve enfin le module de commande C dont les liaisons ne sont pas représentées. Le convertisseur CP2 peut être raccordé au réseau AC1 par les contacteurs K2.1 et C1I, au réseau AC2 par les contacteurs K2.1 et C2I et au réseau Essentiel AC par les contacteurs K2.2 et Ce. Le convertisseur CP1 peut être raccordé au réseau AC1 par le contacteur K1.1 et au réseau AC2 par le contacteur K1.2.

Les réseaux alternatifs régulés AC1, AC2, Essentiel AC et les réseaux continus régulés DC1, DC2, Essentiel DC sont classiquement déjà mis en oeuvre dans des avions commerciaux. Le réseau électrique secondaire RES, les deux convertisseurs CP1, CP2 et le dispositif d'accumulation d'énergie électrique BAT-HVDC peuvent être ajoutés à aux réseaux régulés déjà mis en oeuvre. Alternativement, il est possible de se passer des réseaux continus régulés et notamment les réseaux DC1 et DC2 en raccordant les charges classiquement alimentés par ces réseaux régulés au nouveau réseau électrique secondaire RES.

En régime nominal et en vol, les deux générateurs GEN1 et GEN2 fonctionnent. Ils alimentent chacun un des réseaux, respectivement AC1 et AC2. Dans une architecture classique les générateurs principaux GEN1 et GEN2 sont sur dimensionnés pour permettre l'alimentation de toutes les charges de l'avion. Le dimensionnement doit tenir compte de pics de consommation dans toutes les phases de vol en régime nominal, c'est-à-dire sans panne. La mise en oeuvre d'un réseau électrique secondaire RES permet au dispositif d'accumulation d'énergie électrique BAT-HVDC de fournir la puissance nécessaire utilisée lors des pics de consommation. Il est alors possible de réduire la puissance nominale des générateurs principaux GEN1 et GEN2 dont le dimensionnement pourra être réalisé en fonction de la puissance moyenne consommée par l'ensemble des charges de l'avion et non plus en fonction de la puissance maximale consommée lors de pics de consommation. Dans le dimensionnement, il est également nécessaire de tenir compte de cas de panne, et notamment du cas de perte d'un moteur et donc d'un des générateurs GEN1 ou GEN2. On peut utiliser la surcapacité de production d'énergie des générateurs GEN 1 et GEN 2 pour charger le dispositif d'accumulation d'énergie électrique BAT-HVDC. A cet effet, le convertisseur CP1 prélève de l'énergie soit sur le réseau AC1 en fermant le contacteur K1.1, soit sur le réseau AC2 en fermant le contacteur K1.2. Le convertisseur CP1 peut être redondé et il est alors possible de prélever de l'énergie sur les deux réseaux AC1 et AC2 à la fois. En cas de panne d'un des modules du convertisseur CP1, l'autre module pourra poursuivre son prélèvement d'énergie sur l'un des réseaux AC1 ou AC2.

En vol, en cas de perte d'un générateur, par exemple le générateur GEN1, le réseau électrique secondaire RES peut alimenter le réseau AC1 au travers du convertisseur CP2 et des contacteurs K2.1 et C1I. Durant cette panne il est toujours possible de prélever de l'énergie sur le réseau AC2 pour alimenter le réseau électrique secondaire RES au travers du convertisseur CP1 et du contacteur K1.2. Autrement dit, même en cas de perte d'un générateur, il est possible de ne pas décharger le dispositif d'accumulation d'énergie électrique BAT-HVDC tout en utilisant le réseau électrique secondaire RES pour alimenter l'un des réseaux principaux.

Plus généralement le dispositif d'accumulation d'énergie électrique BAT-HVDC peut se recharger en permanence pendant la totalité du vol. Comme on l'a évoqué plus haut, les générateurs principaux GEN1 et GEN2 sont surdimensionnés pour tenir compte des cas de pertes d'un des générateurs. En fonctionnement nominal, c'est à dire sans panne, les générateurs principaux GEN1 et GEN2 sont sous-chargés. De l'ordre de 30% et 40% de leur puissance disponible est utilisée de telle sorte qu'il reste entre 60% et 70 % de puissance disponible sur chacun des générateurs, ce qui est largement suffisant pour recharger rapidement le dispositif d'accumulation d'énergie électrique BAT-HVDC sur les phases de fonctionnement nominales et notamment en croisière.

En cas de perte d'un moteur, le générateur restant doit reprendre la charge du générateur perdu. Il peut donc se retrouver chargé entre 60 à 80 %. Dans ce cas, il reste encore une capacité de recharge du dispositif d'accumulation d'énergie électrique BAT-HVDC comprise entre 20% et 40 % de la puissance du générateur restant. Il est avantageux de dimensionner le réseau secondaire RES et le dispositif d'accumulation d'énergie électrique BAT-HVDC pour remplacer un générateur principal en cas de perte de ce générateur.

En cas de perte du second générateur GEN2, on ferme le contacteur C2I pour alimenter le réseau AC2 par le convertisseur CP2. Il est également possible d'alimenter le réseau Essentiel AC par le convertisseur CP2 et les contacteurs K2.2 et Ce. Il est possible de dimensionner le dispositif d'accumulation d'énergie électrique BAT-HVDC de façon suffisante pour se passer de la RAT. En effet, comme on l'a vu précédemment, lors d'une panne d'un générateur il est possible de ne pas prélever d'énergie dans le dispositif d'accumulation d'énergie électrique BAT-HVDC. L'énergie qu'il contient est donc disponible lorsqu'une panne survient sur un second générateur alors que le premier était déjà en panne.

En cas de panne d'une charge raccordée à l'un des réseaux principaux, la panne entrainant un court-circuit de la charge, la sur consommation momentanée sur le réseau principal concerné peut être encaissée par le réseau électrique secondaire RES au travers du convertisseur CP2. Cette sur consommation intervient entre l'apparition du court-circuit et le déclenchement d'une protection isolant la charge du réseau principal concerné. Dans ce cas de panne, l'apport d'énergie par le réseau électrique secondaire RES permet de limiter l'appel de courant au générateur principal alimentant le réseau principal concerné et permet également de limiter le risque de surtension apparaissant sur le réseau principal lors de l'isolement de la charge. En effet, les variations rapides de production d'énergie sont difficiles à gérer au niveau des générateurs principaux. Pour faciliter l'apport rapide d'énergie par le réseau électrique secondaire RES, le convertisseur CP2 est raccordé au réseau électrique principal concerné AC1 et/ou AC2 et/ou Essentiel AC au travers d'un interrupteur électronique à base de semi-conducteur, dont le changement d'état est généralement beaucoup plus rapide qu'un contacteur électromécanique. Parmi les interrupteurs électroniques, on peut notamment citer les transistors à effet de champ à grille isolée, couramment appelés IGBT pour leur acronyme anglo-saxon : « Insulated Gate Bipolar Transistor » et les thyristors. Pour assurer l'isolement du réseau électrique secondaire RES et des réseaux principaux, il est possible de disposer en série de l'interrupteur électronique : un sectionneur électromécanique qui est normalement fermé.

Le dispositif d'accumulation d'énergie électrique BAT-HVDC peut également être rechargé lorsque l'avion est au sol, par un groupe de parc branché à la prise de parc EXT PWR 1 au travers l'un des réseaux AC1 ou AC2 en fermant le contacteur K1.1 ou K1.2. Lorsqu'une prise EXT PWR 2 existe et qu'un groupe de parc adapté est disponible, il est également possible de recharger le dispositif d'accumulation d'énergie électrique BAT-HVDC au travers de la prise de parc EXT PWR 2.

Les moteurs de roues de l'avion permettant de le déplacer en mode e-taxi peuvent être alimentés par le réseau électrique secondaire RES. En fonctionnement nominal, le dispositif d'accumulation d'énergie électrique BAT-HVDC alimente les moteurs de roues. En cas de panne ou de décharge du dispositif d'accumulation d'énergie électrique BAT-HVDC, la fonction e-taxi peut toujours être assurée au moyen des générateurs principaux GEN1 et GEN2 entrainés par les moteurs de propulsion. Les générateurs GEN1 et GEN2 alimentent les réseaux AC1 et AC2 qui alimentent à leur tour le réseau électrique secondaire RES au travers du convertisseur CP1 ce qui permet d'alimenter les moteurs de roues. Autrement dit même en cas de panne de l'équipement principal connecté au réseau électrique secondaire RES, à savoir le dispositif d'accumulation d'énergie électrique BAT-HVDC, la fonction e-taxi reste disponible.

Contrairement aux Batteries 28 V BAT1 et BAT2 qui sont prévues en mode secours pour alimenter des charges 28V continu et quelques charges essentielles au travers du convertisseur INV STAT, le dispositif d'accumulation d'énergie électrique BAT-HVDC peut alimenter transitoirement tout type de charges pendant l'ensemble des phases de vol et délivrer des puissances instantanées importantes. Le dispositif d'accumulation d'énergie électrique BAT-HVDC est avantageusement dimensionné pour délivrer une puissance instantanée du même ordre de grandeur que celle de chacun des générateurs principaux GEN1 ou GEN2, typiquement entre la moitié et une fois et demie la puissance instantanée de chacun des générateurs principaux GEN1 ou GEN2. La durée pendant laquelle le dispositif d'accumulation d'énergie électrique BAT-HVDC peut fournir cette puissance dépend essentiellement de l'énergie et donc de sa taille qui est dimensionnée en fonction des charges susceptibles d'être alimentées. Afin d'optimiser la masse du dispositif d'accumulation d'énergie électrique BAT-HVDC ainsi que celle des convertisseurs associés au réseau secondaire RES, il est avantageux de maximiser le nombre de charges susceptibles d'être alimentées par le réseau secondaire RES et de l'utiliser durant toutes les phases de vol de l'avion. A la différence des batteries 28 V continu destinées essentiellement au mode secours, il est avantageux d'utiliser le réseau secondaire RES et le dispositif d'accumulation d'énergie électrique BAT-HVDC durant toutes les phases de fonctionnement, aussi bien au sol qu'en vol et pour permettre un apport d'énergie en mode nominal et en mode secours.

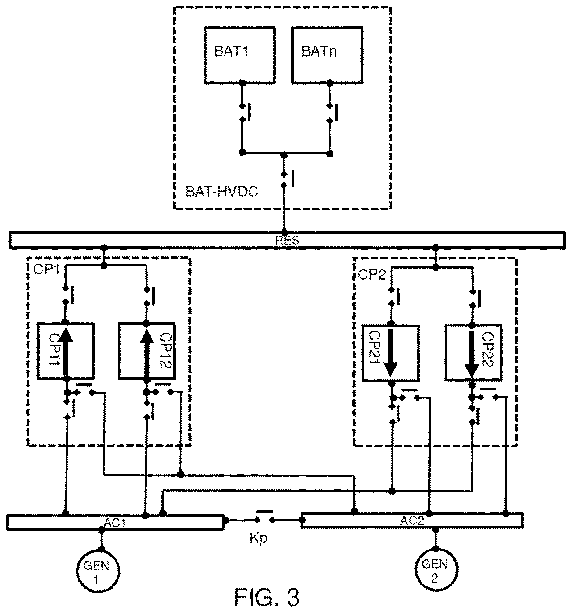

La figure 3 représente un exemple d'architecture électrique selon l'invention dans lequel les convertisseurs CP1 et CP2 sont redondés. De plus le dispositif d'accumulation d'énergie électrique BAT-HVDC est également redondé. Dans le cadre de l'invention, il est bien entendu possible de n'avoir que la redondance d'un des convertisseurs CP1 ou CP2 ou que celle du dispositif d'accumulation d'énergie électrique BAT-HVDC. Le réseau électrique secondaire RES représenté sur la figure 3 est un réseau continu. Alternativement le réseau électrique secondaire RES peut être un réseau alternatif. Le convertisseur CP1 comprend deux modules CP11 et CP12 pouvant fonctionner en parallèle pour alimenter le réseau électrique secondaire RES. Dans cet exemple, l'architecture électrique comprend deux réseaux principaux alternatifs AC1 et AC2. Les deux modules CP11 et CP12 sont des convertisseurs alternatif/continu. Ils peuvent être identiques. Le convertisseur CP2 comprend deux modules CP21 et CP22 pouvant fonctionner en parallèle pour prélever de l'énergie du réseau électrique secondaire RES et alimenter tous deux, les deux réseaux AC1 et AC2 au moyen d'un jeu de contacteurs. Les deux modules CP21 et CP22 sont des convertisseurs continu/alternatif. Le dispositif d'accumulation d'énergie électrique BAT-HVDC comprend plusieurs modules d'accumulation notés BAT1 à BATn pouvant fonctionner en parallèle. Si l'un des modules d'accumulation est en panne, celui-ci peut être déconnecté au moyen d'un contacteur qui lui est propre.

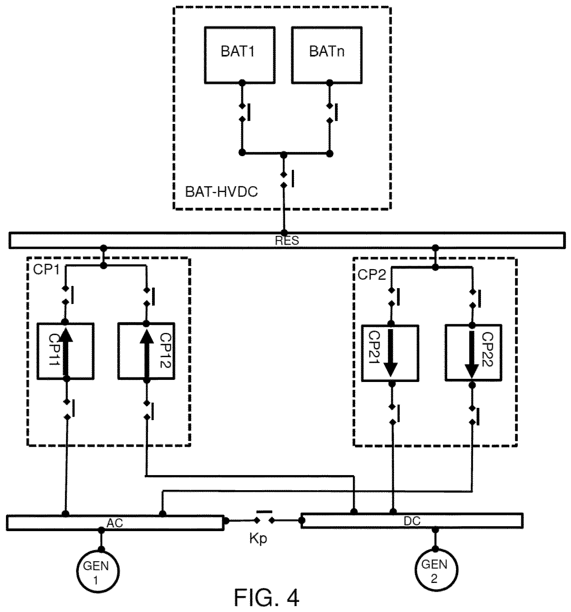

La figure 4 représente un autre exemple d'architecture électrique selon l'invention où les convertisseurs CP1 et CP2 sont redondés. Dans cet exemple on retrouve le dispositif d'accumulation d'énergie électrique BAT-HVDC redondé de la figure 3. Dans l'exemple de la figure 4, l'architecture électrique comprend deux réseaux principaux AC et DC. Le réseau AC est un réseau alternatif et le réseau DC, un réseau continu. Le module CP11 est un convertisseur alternatif/continu et le module CP12 est un convertisseur continu/continu. Le convertisseur CP2 comprend deux modules CP21 et CP22 pouvant fonctionner en parallèle pour prélever de l'énergie du réseau électrique secondaire RES et alimenter respectivement chacun des réseaux principaux DC et AC. Le module CP21 est un convertisseur continu/continu et le module CP22 est un convertisseur continu/alternatif.

## Revendications

1. Architecture électrique d'un aéronef comprenant :
- plusieurs générateurs principaux (GEN1, GEN2) chacun associé à un moteur de propulsion de l'aéronef, chacun des générateurs principaux étant configuré pour délivrer une puissance nominale,
- plusieurs réseaux électriques principaux (AC1, AC2, Essentiel AC) chacun associé à un générateur principal en régime nominal et fonctionnant à une première tension nominale,
- un réseau électrique secondaire monobloc (RES) fonctionnant dans une plage de tension dont la valeur minimale est au moins égale au double de la valeur de la première tension nominale,
- un dispositif d'accumulation d'énergie électrique (BAT-HVDC) directement raccordé au réseau secondaire,
- un premier convertisseur d'énergie électrique (CP1) disposé entre le réseau électrique secondaire (RES) et un premier des réseaux électriques principaux (AC1) permettant le transfert d'énergie du premier des réseaux électriques principaux vers le réseau électrique secondaire, le premier convertisseur d'énergie électrique (CP1) étant destiné à fournir de l'énergie électrique au dispositif d'accumulation d'énergie (BAT-HVDC) électrique en régime nominal,
- un second convertisseur d'énergie électrique (CP2) disposé entre le réseau électrique secondaire (RES) et un second des réseaux électriques principaux (AC2) permettant le transfert d'énergie, en régime nominal, du réseau électrique secondaire vers le second des réseaux électriques principaux,
le dispositif d'accumulation d'énergie électrique (BAT-HVDC) et le second convertisseur d'énergie électrique (CP2) étant configurés pour permettre la fourniture au second des réseaux électriques principaux d'une puissance au moins égale à la moitié de la puissance nominale d'un des générateurs principaux (GEN1, GEN2).

2. Architecture électrique selon la revendication 1, comprenant en outre :
- au moins un réseau continu basse tension régulé (DC1, DC2, Essentiel DC, BAT DC) dont la tension nominale est sensiblement comprise entre 24 et 30 V, le réseau continu basse tension étant distinct du réseau électrique secondaire monobloc (RES),
- au moins une batterie (BAT1, BAT2) raccordée au réseau continu basse tension,
- un troisième convertisseur d'énergie électrique (TRU1, TRU2, TRU ESS) permettant d'alimenter le réseau continu basse tension à partir d'un des réseaux électriques principaux (AC1, AC2, Essentiel AC),
- un quatrième convertisseur d'énergie électrique (INV STAT) permettant d'alimenter un des réseaux électriques principaux (Essentiel AC) auquel sont raccordées des charges essentielles de l'aéronef.

3. Architecture électrique selon l'une des revendications précédentes, dans laquelle les réseaux électriques principaux sont régulés et dans laquelle le réseau électrique secondaire (RES) est un réseau à tension continue dont la tension est fixée par le dispositif d'accumulation d'énergie électrique (BAT-HVDC).

4. Architecture électrique selon la revendication 3, dans laquelle le réseau électrique secondaire monobloc (RES) est configuré pour fonctionner en régime nominal à une tension de fonctionnement dont la valeur peut varier dans un rapport de 1 à 3.

5. Architecture électrique selon l'une des revendications précédentes, dans laquelle le premier convertisseur d'énergie électrique (CP1) possède une puissance nominale plus faible que la puissance nominale du second convertisseur d'énergie électrique (CP2).

6. Architecture électrique selon l'une des revendications précédentes, comprenant en outre une charge régénérative raccordée au réseau électrique secondaire (RES) par l'intermédiaire d'un convertisseur bidirectionnel (DC/AC) sans passer par l'intermédiaire d'un des réseaux électriques principaux.

7. Architecture électrique selon l'une des revendications précédentes, comprenant en outre au moins un groupe de génération électrique (SDC, SAC) indépendant de moteur de propulsion de l'aéronef et raccordé au réseau électrique secondaire (RES) sans passer par l'intermédiaire d'un des réseaux électriques principaux.

8. Architecture électrique selon l'une des revendications précédentes, comprenant en outre un réseau électrique cabine de type domestique, raccordé au réseau électrique secondaire (RES) par l'intermédiaire d'un troisième convertisseur d'énergie électrique (DC/AC) sans passer l'un des réseaux électriques principaux.

9. Architecture électrique selon l'une des revendications précédentes, comprenant en outre un réseau électrique essentiel (Essentiel AC) permettant d'alimenter des charges essentielles de l'aéronef, le second convertisseur d'énergie électrique (CP2) pouvant alimenter le réseau électrique essentiel.

10. Architecture électrique selon l'une des revendications précédentes, comprenant en outre un système de distribution de puissance électrique (EPDS) et un module de contrôle du réseau électrique secondaire (C) échangeant des informations pour piloter les convertisseurs d'énergie électrique (CP1, CP2, DC/AC).

11. Architecture électrique selon l'une des revendications précédentes, dans laquelle le premier et le second convertisseurs d'énergie électrique (CP1, CP2) comprennent chacun un transformateur disposant d'une isolation renforcée.

12. Architecture électrique selon l'une des revendications précédentes, dans laquelle le second convertisseur d'énergie électrique (CP2) est raccordé au second réseau électrique principal (AC1, AC2, Essentiel AC) au travers d'un interrupteur électronique (K2.1 , K2.2) à base de semi-conducteur permettant au réseau électrique secondaire monobloc (RES) de fournir un courant de court-circuit vers une charge raccordée au second réseau électrique principal.

## Patentansprüche

1. Elektrische Architektur eines Luftfahrzeugs, die Folgendes umfasst:
- mehrere Hauptgeneratoren (GEN1, GEN2), die jeweils mit einem Triebwerk des Luftfahrzeugs verbunden sind, wobei jeder der Hauptgeneratoren zum Liefern einer Nennleistung konfiguriert ist,
- mehrere Hauptstromnetze (AC1, AC2, Essential AC), die jeweils mit einem Hauptgenerator im Nennbetrieb assoziiert sind und mit einer ersten Nennspannung betrieben werden,
- ein einteiliges sekundäres Stromnetz (RES), das in einem Spannungsbereich arbeitet, dessen Mindestwert mindestens gleich dem Doppelten des Werts der ersten Nennspannung ist,
- eine Elektroenergiespeichervorrichtung (BAT-HVDC), die direkt an das sekundäre Netz angeschlossen ist,
- einen ersten Elektroenergiewandler (CP1), der zwischen dem sekundären Stromnetz (RES) und einem ersten der Hauptstromnetze (AC1) angeordnet ist und die Übertragung von Energie vom ersten der Hauptstromnetze zum sekundären Stromnetz ermöglicht, wobei der erste Elektroenergiewandler (CP1) zum Liefern von elektrischer Energie an die Elektroenergiespeichervorrichtung (BAT-HVDC) im Nennbetrieb bestimmt ist,
- einen zweiten Elektroenergiewandler (CP2), der zwischen dem sekundären Stromnetz (RES) und einem zweiten der Hauptstromnetze (AC2) angeordnet ist, zum Übertragen von Energie, im Nennbetrieb, vom sekundären Stromnetz zu dem zweiten der Hauptstromnetze,
wobei die Elektroenergiespeichervorrichtung (BAT-HVDC) und der zweite Elektroenergiewandler (CP2) zum Zulassen der Versorgung des zweiten der Hauptstromnetze mit einer Leistung konfiguriert sind, die mindestens gleich der Hälfte der Nennleistung eines der Hauptgeneratoren (GEN1, GEN2) ist.

2. Elektrische Architektur nach Anspruch 1, die ferner Folgendes umfasst:
- mindestens ein reguliertes Niederspannungs-Gleichstromnetz (DC1, DC2, Essential DC, BAT DC), dessen Nennspannung im Wesentlichen zwischen 24 und 30 V liegt, wobei das Niederspannungs-Gleichstromnetz von dem einteiligen sekundären Stromnetz (RES) getrennt ist,
- mindestens eine Batterie (BAT1, BAT2), die an das Niederspannungs-Gleichstromnetz angeschlossen ist,
- einen dritten Elektroenergiewandler (TRU1, TRU2, TRU ESS), zum Versorgen des Niederspannungs-Gleichstromnetzes aus einem der Hauptstromnetze (AC1, AC2, Essential AC),
- einen vierten Elektroenergiewandler (INV STAT), zum Versorgen eines der Hauptstromnetze (Essential AC), an das wesentliche Lasten des Flugzeugs angeschlossen sind.

3. Elektrische Architektur nach einem der vorhergehenden Ansprüche, wobei die Hauptstromnetze reguliert sind und wobei das sekundäre Stromnetz (RES) ein Gleichspannungsnetz ist, dessen Spannung durch die Elektroenergiespeichervorrichtung (BAT-HVDC) festgelegt wird.

4. Elektrische Architektur nach Anspruch 3, wobei das einteilige sekundäre Stromnetz (RES) so konfiguriert ist, dass es im Nennbetrieb mit einer Betriebsspannung betrieben wird, deren Wert in einem Verhältnis von 1 zu 3 variieren kann.

5. Elektrische Architektur nach einem der vorhergehenden Ansprüche, wobei der erste Elektroenergiewandler (CP1) eine geringere Nennleistung als die Nennleistung des zweiten Elektroenergiewandlers (CP2) aufweist.

6. Elektrische Architektur nach einem der vorhergehenden Ansprüche, die ferner eine regenerative Last umfasst, die über einen bidirektionalen Wandler (DC/AC) an das sekundäre Stromnetz (RES) angeschlossen ist, ohne über eines der Hauptstromnetze zu gehen.

7. Elektrische Architektur nach einem der vorhergehenden Ansprüche, die ferner mindestens eine Stromerzeugungsgruppe (SDC, SAC) umfasst, die unabhängig von jeglichem Triebwerk des Flugzeugs ist und an das sekundäre Stromnetz (RES) angeschlossen ist, ohne über eines der Hauptstromnetze zu gehen.

8. Elektrische Architektur nach einem der vorhergehenden Ansprüche, die ferner ein haushaltsübliches Kabinenstromnetz umfasst, das über einen dritten Elektroenergiewandler (DC/AC) mit dem sekundären Stromnetz (RES) verbunden ist, ohne eines der Hauptstromnetze zu durchlaufen.

9. Elektrische Architektur nach einem der vorhergehenden Ansprüche, die ferner ein wesentliches Stromnetz (Essential AC) zum Versorgen wesentlicher Lasten des Luftfahrzeugs umfasst, wobei der zweite Elektroenergiewandler (CP2) das wesentliche Stromnetz versorgen kann.

10. Elektrische Architektur nach einem der vorhergehenden Ansprüche, die ferner ein elektrisches Leistungsverteilungssystem (EPDS) und ein Steuermodul zum Steuern des sekundären Stromnetzes (C) umfasst, das Informationen austauscht, um die Elektroenergiewandler (CP1, CP2, DC/AC) zu steuern.

11. Elektrische Architektur nach einem der vorhergehenden Ansprüche, wobei der erste und der zweite Elektroenergiewandler (CP1, CP2) jeweils einen Transformator umfassen, der über eine verstärkte Isolierung verfügt.

12. Elektrische Architektur nach einem der vorhergehenden Ansprüche, wobei der zweite Elektroenergiewandler (CP2) über einen elektronischen Schalter (K2.1, K2.2) auf Halbleiterbasis an das zweite Hauptstromnetz (AC1, AC2, Essential AC) angeschlossen ist, der es zulässt, dass das einteilige sekundäre Stromnetz (RES) einen Kurzschlussstrom an eine an das zweite Hauptstromnetz angeschlossene Last liefert.

## Claims

1. An electrical architecture of an aircraft comprising:
- several primary generators (GEN1, GEN2), each associated with a propulsion engine of the aircraft, each of the primary generators being configured to deliver a nominal power,
- several primary electrical networks (AC1, AC2, Essential AC), each associated with a primary generator in nominal operating mode and operating at a first nominal voltage,
- a single-part secondary electrical network (RES) operating in a voltage range whose minimum value is at least equal to twice the value of the first nominal voltage,
- an electrical energy accumulation device (BAT-HVDC) connected directly to the secondary network,
- a first electrical energy converter (CP1) placed between the secondary electrical network (RES) and a first one of the primary electrical networks (AC1), allowing energy to be transferred from the first one of the primary electrical networks to the secondary electrical network, the first electrical energy converter (CP1) being intended to supply electrical energy to the electrical energy accumulation device (BAT-HVDC) in nominal operating mode,
- a second electrical energy converter (CP2) placed between the secondary electrical network (RES) and a second one of the primary electrical networks (AC2), allowing energy to be transferred, in nominal operating mode, from the secondary electrical network to the second one of the primary electrical networks,
the electrical energy accumulation device (BAT-HVDC) and the second electrical energy converter (CP2) being configured to allow the second one of the primary electrical networks to be supplied with a power at least equal to half the nominal power of one of the primary generators (GEN1, GEN2).

2. The electrical architecture according to claim 1, further comprising:
- at least one regulated low-voltage DC network (DC1, DC2, Essential DC, BAT DC) whose nominal voltage is substantially between 24 and 30 V, the low-voltage DC network being separate from the single-part secondary electrical network (RES),
- at least one battery (BAT1, BAT2) connected to the low-voltage DC network,
- a third electrical energy converter (TRU1, TRU2, TRU ESS) for supplying power to the low-voltage DC network from one of the primary electrical networks (AC1, AC2, Essential AC),
- a fourth electrical energy converter (INV STAT) for supplying power to one of the primary electrical networks (Essential AC) to which the essential loads of the aircraft are connected.

3. The electrical architecture according to one of the preceding claims, wherein the primary electrical networks are regulated and wherein the secondary electrical network (RES) is a direct voltage network whose voltage is set by the electrical energy accumulation device (BAT-HVDC).

4. The electrical architecture according to claim 3, wherein the single-part secondary electrical network (RES) is configured to operate, in nominal operating mode, at an operating voltage whose value may vary within a ratio from 1 to 3.

5. The electrical architecture according to one of the preceding claims, wherein the first electrical energy converter (CP1) has a nominal power lower than the nominal power of the second electrical energy converter (CP2).

6. The electrical architecture according to one of the preceding claims, further comprising a regenerative load connected to the secondary electrical network (RES) by way of a bidirectional converter (DC/AC) without passing via one of the primary electrical networks.

7. The electrical architecture according to one of the preceding claims, further comprising at least one electric generator unit (SDC, SAC) independent of any propulsion engine of the aircraft and connected to the secondary electrical network (RES) without passing via one of the primary electrical networks.

8. The electrical architecture according to one of the preceding claims, further comprising a domestic-type cabin electrical network connected to the secondary electrical network (RES) by way of a third electrical energy converter (DC/AC) without passing via one of the primary electrical networks.

9. The electrical architecture according to one of the preceding claims, further comprising an essential electrical network (Essential AC) for supplying power to the essential loads of the aircraft, the second electrical energy converter (CP2) being able to supply power to the essential electrical network.

10. The electrical architecture according to one of the preceding claims, further comprising an electrical power distribution system (EPDS) and a control module for controlling the secondary electrical network (C), exchanging information for driving the electrical energy converters (CP1, CP2, DC/AC).

11. The electrical architecture according to one of the preceding claims, wherein the first and second electrical energy converters (CP1, CP2) each comprise a transformer having reinforced insulation.

12. The electrical architecture according to one of the preceding claims, wherein the second electrical energy converter (CP2) is connected to the second primary electrical network (AC1, AC2, Essential AC) through a semiconductor-based electronic switch (K2.1, K2.2), allowing the single-part secondary electrical network (RES) to supply a short-circuit current to a load connected to the second primary electrical network.
